Europäisches Patentamt

European Patent Office

Office européen des brevets

(11) Veröffentlichungsnummer: **0 130 943**
**B1**

(12) **EUROPÄISCHE PATENTSCHRIFT**

(45) Veröffentlichungstag der Patentschrift: **03.10.90**

(51) Int. Cl.⁵: **C 02 F 1/24**

(21) Anmeldenummer: **84810295.0**

(22) Anmeldetag: **18.06.84**

(54) **Verfahren zur kontinuierlichen Abscheidung von in einer verunreinigten, tensidhaltigen Flüssigkeit enthaltenen Stoffen.**

(30) Priorität: **01.07.83 CH 3616/83**

(43) Veröffentlichungstag der Anmeldung:
**09.01.85 Patentblatt 85/02**

(45) Bekanntmachung des Hinweises auf die Patenterteilung:
**03.10.90 Patentblatt 90/40**

(84) Benannte Vertragsstaaten:
**AT DE FR GB IT NL**

(56) Entgegenhaltungen:
**EP-A-0 082 809**
**FR-A-2 078 799**
**US-A-3 975 269**
**US-A-4 338 192**

(73) Patentinhaber: **Perren, Benno**
**Austrasse 33**
**CH-5430 Wettingen (CH)**

(72) Erfinder: **Perren, Benno**
**Austrasse 33**
**CH-5430 Wettingen (CH)**

(74) Vertreter: **Winkler, Kurt, Dr.**
**Mellingerstrasse 69**
**CH-5400 Baden (CH)**

**Die Akte enthält technische Angaben, die nach dem Eingang der Anmeldung eingereicht wurden und die nicht in dieser Patentschrift enthalten sind.**

Courier Press, Leamington Spa, England.

**Beschreibung**

Die Erfindung betrifft ein Verfahren zur kontinuierlichen Abscheidung von in einer verunreinigten, tensidhaltigen Flüssigkeit enthaltenen Stoffen, die auch Schmutzansammlungen und Phosphate umfassen können, sowie eine Vorrichtung zur Durchführung des Verfahrens.

Verschmutzte Flüssigkeiten, insbesondere Abwässer, weisen fast immer erhebliche Mengen von Tensiden und waschaktiven Substanzen auf Phosphorbasis auf. Entstanden Öl-in-Wasser-Gemische beispielsweise können bei Vorhandensein von Tensiden als Emulsionen über Jahre praktisch stabil bleiben. Die Tenside sind oberflächenaktive Stoffe, deren Moleküle einen hydrophilen und einen hydrophoben Teil haben. Weil die Ölteilchen praktisch immer ein negatives Grenzflächenpotential aufweisen, lagern sich die Tensidmoleküle mit dem hydrophoben Ende an den Ölteilchen an. Die hydrophilen Molekülenden, welche in die Wassermoleküle hineinragen, haben gegenüber den Wassermolekülen nur einen geringen Verdrängungsdruck, also ein hohe Affinität. Darum weisen Öl-Wasser-Emulsionen in der Regel eine ausserordentliche Stabilität auf und zerfallen nur sehr langsam wieder in die Öl- bzw. Wasserphase.

Müssen aus Flüssigkeiten tensid- oder phosphatbehaftete Verunreinigungen entfernt werden, so ist die Eliminierung der Tenside und Phosphate ebensowichtig wie die Entfernung der Primärverunreinigungen, also der in der Flüssigkeit suspendierten und in grösseren Ansammlungen vorhandenen Stoffe.

Emulsionen können beispielsweise mit Hilfe der Elektrolyse durch Mitfällung von Metallhydroxiden getrennt werden. Dabei fällt den an der Kathode entstehenden Wasserstoffbläschen die Aufgabe zu, die aus Metallhydroxiden und Verunreinigungen gebildeten Mikroflocken zu flotieren. Weil aber die Wasserstoffbläschen gegenüber dem hydrophoben Ende des Tensidmoleküls eine hohe Affinität aufweisen, lagern sich die Tensidmoleküle an den Wasserstoffbläschen an und verhindern dieselben am Anlagern an den Metallhydroxiden. Darum können z.B. Abwässer mit hohem Tensidanteil mit Hilfe der Elektrolyse—unter Einhaltung einer bestimmten Stromstärke—nur ungenügend gereinigt werden. Da beim Elektrolyseverfahren die Wasserstoff-Produktion proportional der Stromstärke ist, sind diesem Verfahren bei grossen Wassermengen praktische Grenzen gesetzt.

Ferner ist ein kontinuierlich ablaufendes Verfahren zur Abscheidung der in einem Schmutzwasser enthaltenen Stoffe bekannt (EP—A—0 082 809), gemäss welchem zur Bildung von Mikroflocken Gasbläschen und ein Polyelektrolyt in das Wasser eingetragen werden. Bei zu langsamen Ausflotieren kann zur Beschleunigung des Prozesses noch ein zweiter Polyelektrolyt mit einer hinsichtlich des ersten entgegengesetzten elektrischen Ladung beigemischt werden, wodurch sich Makroflocken bilden.

Für die Grösse der Gasbläschen wird eine obere Grenze von 300 μ angegeben. In der Praxis hat sich jedoch gezeigt, dass Bläschen bis zu dieser Grössenordnung nicht mehr oder nur noch ungenügend wirksam sind. Dieses Verfahren ist daher nur beschränkt anwendbar. Es können zwar aus Abwässern. Ölemulsionen und schwebende Schmutzteilchen abgeschieden werden, freie Ölmengen und grössere Schmutzansammlungen müssen jedoch vor der Behandlung des Schmutzwassers abgefiltert werden.

Aus FR—A—2 078 799 ist ein Verfahren zur gemeinsamen Reinigung von Abwässern aus der Rohwoll-Wäscherei und -Färberei bekannt. Diese Wässer enthalten chemische und natürliche Stoffe, Erde und Fette bzw. Farbreste. Nach dem vorgängigen Abscheiden des gröberen Schmutzes werden die beiden Abwasser vereinigt, anschliessend wird ein anorganisches Metallsalz und zur Zusammenballung der so gebildeten Flocken ein organisches Koagulationsmittel zugesetzt. Der entstandene Schlamm wird sedimentiert, wofür ein Beruhigungsbecken notwendig ist. Er kann aber auch flotiert werden, wozu Gasblasen eingetragen werden, um die bereits gebildeten Makroflocken an die Oberfläche zu befördern. Dieser Vorgang geschieht in einem Tank. Ein kontinuierlicher Betrieb ist in beiden Fällen nicht möglich.

Als obere Grenze für die anfängliche Verschmutzung werden 1200 ppm angegeben, ansonsten muss verdünnt werden. In günstigen Fällen wird ein Reinheitsgrad zwischen 20—100 ppm erreicht, was heutigentgas nicht mehr ausreicht, um das behandelte Abwasser in die Kanalisation ablassen zu dürfen.

Es war bisher nicht möglich, Phosphate im Zuge eines ablaufenden Verfahrens aus einer Flüssigkeit abzuscheiden. Man benötigt dafür ausgedehnte Becken ohne Strömung, in welchen den Phosphaten genügend Zeit zur Verfügung steht, um dekantieren zu können.

Der Erfindung liegt die Aufgabe zugrunde, ein Verfahren anzugeben, mit welchem verschmutzte tensidhaltige, auch Phosphate und grössere Schmutzansammlungen enthaltende Flüssigkeiten gereinigt werden können.

Diese Aufgabe wird durch die kennzeichnenden Verfahrensschritte des Anspruchs 1 gelöst.

Der Ablauf des Verfahrens bzw, der Vorgang des Schmutzabscheidung wird nachstehend am Beispiel eines verunreinigten, Öl und Tenside enthaltenden Abwassers beschrieben, wie solche aus Industriebetrieben, Garagen und Haushalten anfallen.

Luft—es kann auch ein anderes Gas sein—muss dispers und möglichst homogen im Wasser verteilt werden. Durch die zu ihrer Bildung aufgewendete Energie und wegen der Elektronennegativität von Sauerstoff und Stickstoff weisen die Luftbläschen ein negatives Grenzflächenpotential auf. Die Verunreinigungen sind im Wasser ebenfalls dispers verteilt und zeigen gleichfalls eine negative Ladung. Die Affinität der Tenside gegenüber der Luft bewirkt, dass sich namhafte Mengen Tensidmoleküle von den Ölteilchen und anderen Verunreinigungen in Richtung Luftbläschen verlagern. Die Stabilität einer Emulsion wird dadurch reduziert. Da die Luftbläschen und die Verunreinigungen gleicherweise ein negatives Potential aufweisen, bleiben sie zufolge ihrer dispersen Verteilung im Wasser in Schwebe.

Vom Wasser mitgeführte grössere Schmutzansammlungen, freie Ölemengen usw, müssen beim vorliegenden Verfahren nicht vorgängig, z.B. durch Filterung, abgeschieden werden. Ganz im Gegenteil werden sie in geeigneter Weise in disperse Form gebracht, um sie gleicherweise wie die anderen, meist als Emulsion vorhandenen Verunreinigungen behandeln zu können.

Wichtig ist, dass die Ladung der Luftbläschen und der Schmutzteilchen von der ungefähr gleichen Grössenordnung ist, was bedingt, dass sie auch eine annähernd gleich Dimension aufweisen, und zwar einen Durchmesser von maximal 100 μ. Sind sie grösser, so sind sie nicht mehr ausreichend wirksam. Voraussetzung für den gesicherten Ablauf des Prozesses ist, dass die Luftbläschen in genügend grosser Anzahl, möglichst im Überschuss vorhanden und zumindest annähernd homogen im Wasser verteilt sind.

Wird nun dem derart vorpräparierten Schmutzwasser ein anorganischer Elektrolyt beigegeben, z.B. in Form eines zwei- oder dreiwertigen Eisensalzes oder eines Aluminiumsalzes, so werden die im Wasser schwebenden Schmutzpartikel an den positiv geladenen Metallionen entladen und zusammen mit den dispers verteilten, tensidbehafteten Luftbläschen von den sich bildenden Metallhydroxidverbänden adsorbiert. Auf diese Weise entstehen Mikroflocken, die, weil sie eine positive Nettoladung aufweisen, sich gegenseitig abstossen und daher in Schwebe bleiben.

Im Abwasser enthaltene Phosphate werden beim gleichen Vorgang als schwer lösliche Eisen- oder Aluminiumphosphate gefällt. Sie bleiben so lange in Schwebe, bis sie in gleicher Weise entladen und von den vorhandenen Metallhydroxidverbänden adsorbiert werden.

Wird in das solcherart behandelte Schmutzwasser ein anionischer, organischer Polyelektrolyt, beispielsweise ein Dicyandiamid, beigegeben, so lagern sich die im Wasser enthaltenen Mikroflokken zufolge der hohen Differenz zwischen den beiden entgegengesetzten Ladungen schlagartig an den Polyelektrolytmolekülen an und es bilden sich spontan Makroflocken. Bei diesem Vorgang werden, soweit im Wasser noch frei vorhanden, auch weitere Luftbläschen, ladungsneutrale Schmutzteilchen, Öltröpfchen, Metallphosphate, Schwermetalle usw. miteingeschlossen. Infolge der eingeschlossenen Luftbläschen streben die als Schlamm anfallenden Makroflocken zur Wasseroberfläche und können in bekannter Weise zur Klärung des Wassers abgeschieden werden.

Das erfindungsgemässe Verfahren kann praktisch an jede Verunreinigungsart angepasst werden, indem unter der Vielzahl von Elektrolyten und Polyelektrolyten diejenigen ausgewählt werden, die bezüglich Molekulargewicht und Ladungsdichte am geeignetsten sind. Gemäss der Menge der Verunreinigungen in der Flüssigkeit sind sie entsprechend zu dosieren.

Für die Bereitstellung der bei diesem Verfahren benötigten Gasbläschen bietet sich naheliegenderweise Luft an, doch kann praktisch jedes beliebige Gas dafür verwendet werden. Die Bildung der Gasbläschen und ihre Verteilung in der Flüssigkeit kan beispielsweise mit Hilfe einer Zentrifugalpumpe oder eines Ejektors erfolgen. Es kann aber auch ein anderer Weg gewählt werden. Kohlendioxid ($CO_2$) z.B. kann im flüssigen Aggregatzustand in die unter entsprechendem Druck stehende verunreinigte Flüssigkeit eingetragen werden, wodurch sich eine sehr gute Durchmischungsmöglichkeit der beiden Flüssigkeiten ergibt. Durch Druckentspannung oder mittels Ultraschall wird das $CO_2$ in Form feinster Bläschen in der zu reinigenden Flüssigkeit freigesetzt.

Für die Zerschlagung in der Flüssigkeit vorhandener grösserer Schmutzansammlungen können mit Vorteil die selben mechanischen Einrichtungen wie für die Bildung und Verteilung der Gasbläschen in der Flüssigkeit verwendet werden, nämlich ein oder auch mehrere, hintereinandergeschaltete Zentrifugalpumpen, Ejektoren oder ähnliches. Es sind aber auch noch andere Möglichkeiten vorhanden, beispielsweise die Zerteilung der Schmutzansammlungen durch Ultraschall.

Damit die Makroflocken in der Flüssigkeit aufsteigen, ist nur eine geringe Gasmenge nötig. Es genügt im allgemeinen ein Minimum von 15 Liter pro $m^3$ Flüssigkeit. Dabei entsteht ein schwerer Schlamm mit einem hohen Flüssigkeitsanteil. Je mehr Gas in die Flüssigkeit eingetragen wird, desto leichter und flockiger wird der Schlamm und dementsprechend weniger Flüssigkeit enthält er. So hat es der Praktiker in der Hand, einerseits durch die Grösse und Dichte der Gasbläschen in der Flüssigkeit, andererseits durch die Wahl des Elektrolyten und des Polyelektrolyten, die Art und Beschaffenheit des anfallenden Schlammes in weiten Grenzen zu variieren und eventuellen Bedürfnissen anzupassen.

Das Verfahren erlaubt die Reinigung z.B. von öl- und fettverschmutzten, tensid- und phosphathaltigen Garagen- und Haushaltabwässern, von Bohr- und Schneidölen aus der Industrie, von latexhaltigen Abwässern usw. und ermöglicht sogar die Aufbereitung von Trinkwasser. Gleicherweise ist es in der chemischen Industrie zur Abscheidung von Schwebestoffen aus verschiedenen Prozessflüssigkeiten anwendbar.

Nach diesem Verfahren ist es, wie schon oben erwähnt, nicht mehr notwendig, von der Flüssigkeit mitgeführte grössere Schmutzansammlungen vorgängig unter erheblichem Aufwand abzufiltern. Im Gegensatz zu bekannten Verfahren werden diese Ansammlungen, mit einem nur geringen zusätzlichen Energieverbrauch für die Zerteilung, in den normalen Prozessablauf eingegliedert und mit den übrigen, als Emulsion vorliegenden Schmutzteilchen wieder abgeschieden.

Nachstehend wird anhand der beiliegenden Zeichnung ein schematisch dargestelltes Ausführungsbeispiel der Erfindung näher beschrieben. Es zeigen:

Fig. 1 eine Vorrichtung mit einer Zentrifugalpumpe zur Feinstverteilung des eingetragenen Gases in der Flüssigkeit;

Fig. 2 als Variante zu Fig. 1 einen Ejektor, welcher die Funktion der Zentrifugalpumpe übernimmt.

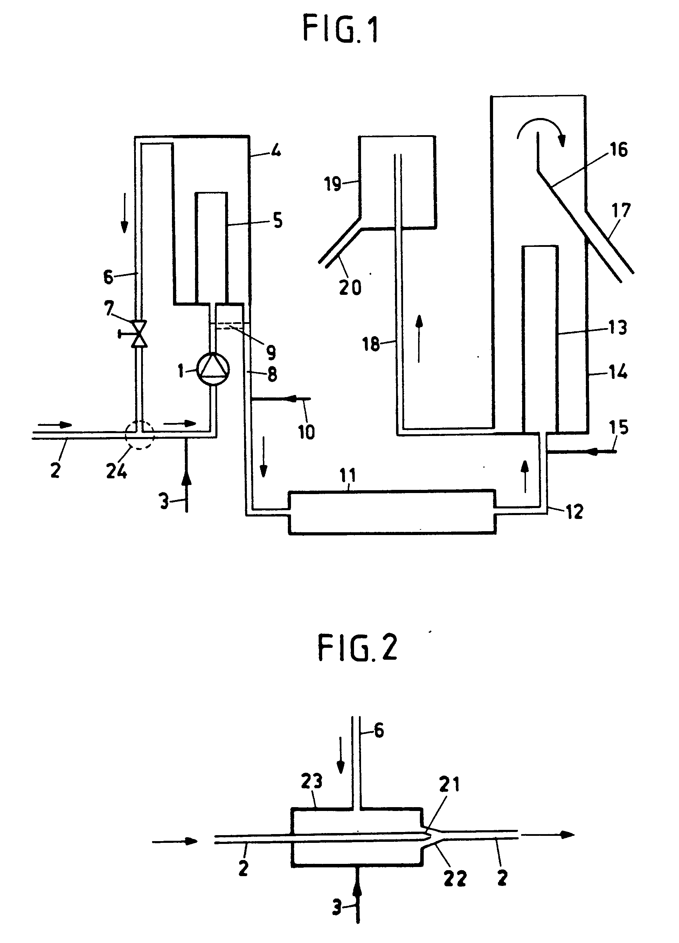

Nach Fig. 1 wird die verunreinigte Flüssigkeit von der Zentrifugalpumpe 1 durch die Zulaufleitung 2 angesaugt und weitergefördert. Am Strömungswege zur Pumpe wird durch die Zuführleitung 3 ein Gas in die Flüssigkeit eingebracht. Beim Durchströmen der Zentrifugalpumpe 1 wird das Gas in der Flüssigkeit dispers verteilt. Von der Flüssigkeit eventuell mitgeführte grössere Schmutzansammlungen werden durch den selben Vorgang zu kleinen Teilchen zerschlagen und gleicherweise in der Flüssigkeit nahezu homogen verteilt.

Die Flüssigkeit strömt anschliessend zum Gasabscheider 4, wo sie im Trennrohr 5 nach oben geführt wird und nach dem Austritt aus dem Trennrohr wieder nach unten strömt. Zu grosse Gasblasen mit höherem Auftrieb können oben aus dem Abscheider in die Atmosphäre abgelassen werden. Oft ist es aber zweckmässig, diese Gasblasen, vorteilhafterweise zusammen mit einem Teil der Flüssigkeit, durch die Rückführleitung 6 zur Zulaufleitung 2 zu führen. Die Verteilung des Gases in der Flüssigkeit wird durch diese Rückführung unterstützt. Durch das Drosselventil 7 in der Rückführleitung 6 kann die Menge der im Kreislauf geführten Flüssigkeit gesteuert werden.

Die Flüssigkeit mit den darin dispers verteilten Gasbläschen wird durch die Leitung 8 aus dem Abscheider 4 abgeführt. Sollten keine oder nur wenige grössere Gasblasen zu erwarten sein, beispielsweise weil wegen einem nur geringen Verschmutzungsgrad der Flüssigkeit auch nur wenig Gas eingebracht werden muss oder weil zur besseren Zerschlagung von Schmutzansammlungen mehrere oder mehrstufige Zentrifugalpumpen vorgesehen sind, dann wird der Gasabscheider überflüssig. In diesem Falle gelangt die Flüssigkeit nach der Pumpe 1 über die—gestrichelt eingezeichnete—Zwischenleitung 9 direkt zur Abführleitung 8.

Am Strömungswege durch die Abführleitung 8 wird der Flüssigkeit durch die Zuführleitung 10 ein anorganischer Elektrolyt beigemischt, wodurch, wie schon beschrieben, Mikroflocken entstehen. Für die volle Wirksamkeit dieses Vorganges bedarf es jedoch einer guten Durchmischung der die Gasbläschen enthaltenden Flüssigkeit mit dem Elektrolyten. Zu diesem Zwecke kann beispielsweise die Leitung 8 in entsprechender Länge ausgeführt werden. Einfacher wird es im allgemeinen sein, als Beruhigungs- und Reaktionsteil das Rohr 11 mit einem mehrfachen Durchmesser gegenüber jenem der Leitung 8 vorzusehen.

Prinzipiell ist die Reihenfolge, in der das Gas und der Elektrolyt der zu reinigenden Flüssigkeit beigemischt werden, frei wählbar.

Nach dem Beruhigungsteil 11 gelangt die Flüssigkeit durch die Verbindungsleitung 12 in das Trennrohr 13 des Abscheiders 14. Am Wege dorthin—es kann auch innerhalb des Trennrohres 13 sein—wird der Flüssigkeit durch die Leitung 15 ein anionischer, organischer Polyelektrolyt zugeführt. Es bilden sich dadurch Makroflocken, was schlagartig erfolgt. Diese steigen als Schlamm nach oben und sobald sie die Scheidewand 16 übersteigen, fliessen sie durch den Ablauf 17 ab.

Die solcherart geklärte, un saubere Flüssigkeit strömt zwischen dem Trennrohr 13 und dem Mantel des Abscheiders 14 nach unten, steigt in der Ablaufleitung 18 hoch und tritt in den Sammler 19 aus, von wo sie durch den Auslauf 20 abfliesst.

Die Fig. 2 zeigt eine andere Möglichkeit, wie das Gas in der Flüssigkeit dispers verteilt werden kann. Die Zulaufleitung 2, durch welche die verunreinigte Flüssigkeit unter Druck zugeleitet wird, ist unterbochen, das ausmündende Ende des einen Teils ist zur Düse 21 verengt, die in das trichterförmig erweiterte Ende 22 des anderen Teils hineinragt. Es entsteht so ein Ejektor, dessen Wirkung darin besteht, dass der scharfe Flüssigkeitsstrahl das ihn umgebende Gas mitreisst und zufolge der herrschenden Turbulenz mikrofein verteilt. Das Gas kann Luft aus der Atmosphäre sein, es kann aber auch ein beliebiges Gas sein, das über die Leitung 3 in die Ummantelung 23 des Ejektors eingeleitet wird. Ist eine Rückführleitung 6 für die grösseren Gasblasen vorgesehen, so führt man zweckmässigerweise auch diese in die Ummantelung 23 ein. In diesem Falle ist das Ejektor-Aggregat an der Stelle 24 der Fig. 1 angeordnet.

Wird ein verflüssigtes Gas, z.B. $CO_2$, für den Prozess verwendet, so muss es unter einem entsprechenden Druck stehen. Um den sich beitenden Vorteil, nämlich die gute Durchmischungsmöglichkeit von zwei Flüssigkeiten, voll ausnützen zu können, muss auch die verunreinigte Flüssigkeit auf den Druck des verflüssigten Gases gebracht werden. Dies geschieht durch die Anordnung einer Pumpe, sofern eine solche nicht schon vorgesehen ist, sowie eines der Pumpe nachgeordneten Drosselventils in einer von der verunreinigten Flüssigkeit durchströmten Leitung. Durch das Ventil wird der notwendige Druck im Leitungsstück zwischen Pumpe und Ventil hergestellt und aufrechterhalten. In dieses Leitungsstück muss die Zuführleitung für das verflüssigte Gas einmünden. Bei der Druckentspannung hinter dem Ventil bilden sich feinste, in der zu reinigenden Flüssigkeit praktisch homogen verteilte Gasbläschen.

Es sei noch vermerkt, dass die beschriebene Vorrichtung auch in Verbindung mit einem eine Opferanode aufweisenden Elektrolyse-Aggregat verwendet werden kann.

**Patentansprüche**

1. Verfahren zur kontinuierliche Abscheidung von in einer verunreinigten, tensidhaltigen Flüssigkeit enthaltenen Stoffen, die auch Schmutzansammlungen und Phosphate umfassen können, durch Einbringung sowohl eines Gases in die Flüssigkeit in Form von Bläschen, welche dispers und zumindest annähernd homogen in der Flüssigkeit verteilt werden, als auch eines Zusatzstoffes zur Bildung von Mikroflocken, wobei mindestens 15 Liter Gas pro m³ Flüssigkeit zugeführt werden, der Durchmesser der Gasbläschen maximal 100 µ beträgt und der Zusatzstoff aus einem anorganischen Elektrolyt besteht, die gegebenenfalls in der Flüssigkeit vorhandenen grösseren Schmutzansammlungen nach einer Zerschlagung derselben ebenfalls dispers und zumindest annähernd homogen in der Flüssigkeit verteilt werden, nach einer Beruhigung der Strömung ein anionischer, organischer Polyelektrolyt der Flüssigkeit beigemischt wird, und die dadurch entstehenden Makroflocken zur Klärung der Flüssigkeit abgeschieden werden.

2. Verfahren nach Anspruch 1, dadurch gekennzeichnet, dass die Gasbläschen in der verunreinigten Flüssigkeit aus Luft bestehen.

3. Verfahren nach Anspruch 1, dadurch gekennzeichnet, dass die Gasbläschen in der verunreinigten Flüssigkeit aus Kohlendioxid (CO₂) bestehen.

4. Verfahren nach Anspruch 3, dadurch gekennzeichnet, dass das CO₂ im flüssigen Aggregatzustand der verunreinigten Flüssigkeit zugeführt wird.

5. Verfahren nach Anspruch 1, dadurch gekennzeichnet, dass grössere Gasblasen dem Prozess entnommen und im Kreislauf in die zuströmende verunreinigte Flüssigkeit rückgeführt werden.

6. Verfahren nach Anspruch 1, dadurch gekennzeichnet, dass die Verteilung der Gasbläschen in der Flüssigkeit und die Zerschlagung und Verteilung der in der Flüssigkeit vorhandenen grösseren Schmutzansammlungen im selben Verfahrensschritt durchgeführt werden.

7. Vorrichtung zur Durchführung des Verfahrens nach Anspruch 1, gekennzeichnet durch eine Zulaufleitung (2) für die verunreinigte, tensidhaltige Flüssigkeit, eine Zuführleitung (3) für das Gas und eine Zuführleitung (10) für den Elektrolyt in die Flüssigkeit, durch eine Einrichtung (1, 21/22) zur Feinstverteilung des Gases in der Flüssigkeit und eine Einrichtung zur Zerschlagung gegebenenfalls in der Flüssigkeit vorhandener Schmutzansammlungen und Verteilung der so entstandenen Teilchen in der Flüssigkeit, durch einen von der Flüssigkeit anschliessend durchströmten Mischteil (8) und einen Beruhigungs- und Reaktionsteil (11) eine nach dem Beruhigungsteil einmündende Zuführleitung (15) für den anionischen Polyelektrolyt in die Flüssigkeit, durch einen Schlammabscheider (14) für die entstandenen Makroflocken und eine Ablaufleitung (18) für die geklärte Flüssigkeit.

8. Vorrichtung nach Anspruch 7, gekennzeichnet durch eine Zentrifugalpumpe (1), die, in Strömungsrichtung der Flüssigkeit gesehen, in der Zulaufleitung (2) nach der Einmündung der Zuführleitung (3) für das Gas angeordnet ist.

9. Vorrichtung nach Anspruch 7, gekennzeichnet durch einen Ejektor (21/22) in der Zulaufleitung (2), welcher das ihn umgebende Gas mitreisst.

10. Vorrichtung nach Anspruch 7, gekennzeichnet durch einen Abscheider (4) für die grösseren Gasblasen.

11. Vorrichtung nach Anspruch 10, gekennzeichnet durch eine Rückführleitung (6) aus dem Abscheider (4) zu der Zulaufleitung (2).

12. Verwendung der Vorrichtung nach Anspruch 7 in Verbindung mit einem eine Opferanode aufweisenden Elektrolyse-Aggregat.

## Revendications

1. Procédé pour séparer en continu des substances contenues dans un liquide pollué chargé de dérivés tensioactifs et pouvant également comprendre des accumulations de boue et des phosphates, en introduisant dans le liquide aussi bien un gaz sous la forme de bulles qui sont dispersées et réparties au moins approximativement de manière homogène dans ledit liquide, qu'un adjuvant pour la formation de microflocons, au moins 15 litres de gaz par m³ de liquide étant amenés, le diamètre maximum des bulles de gaz étant de 100 µ et l'adjuvant étant constitué d'un électrolyte inorganique, des accumulations de boue assez importantes éventuellement présentes dans le liquide étant également dispersées après une fragmentation et réparties au moins approximativement de manière homogène, un polyélectrolyte anionique organique étant ajouté au liquide après une stabilisation de l'écoulement, et les macroflocons ainsi produits étant séparés pour la clarification du liquide.

2. Procédé selon la revendication 1, caractérisé en ce que les bulles de gaz dans le liquide pollué se composent d'air.

3. Procédé selon la revendication 1, caractérisé en ce que les bulles de gaz dans le liquide pollué se composent de dioxyde de carbone (CO₂).

4. Procédé selon la revendication 3, caractérisé en ce que le CO₂ est introduit dans le liquide pollué à l'état liquide.

5. Procédé selon la revendication 1, caractérisé en ce que des bulles de gaz assez grandes sont prélevées du processus et réinjectées dans le liquide pollué arrivant.

6. Procédé selon la revendication 1, caractérisé en ce que la répartition des bulles de gaz dans le liquide et la fragmentation de la répartition des accumulations de boue assez importantes dans le liquide sont effectuées en une seule opération.

7. Dispositif pour la mise en oeuvre du procédé selon la revendication 1, caractérisé en ce qu'il comprend une canalisation d'arrivée (2) pour le liquide pollué chargé de dérivés tensio-actifs, une canalisation d'amenée (3) pour le gaz et une canalisation d'amenée (10) pour l'électrolyte dans le liquide, un dispositif (1, 21/22) pour la répartition extrêmement fine du gaz dans le liquide et un dispositif pour la fragmentation des accumulations de boue éventuellement présentes dans le liquide et pour la répartition des particules ainsi obtenues dans le liquide, une section de mélange (8) traversée ensuite par le liquide et une section de stabilisation et de réaction (11) une canalisation d'amenée (15) du polyélectrolyte anionique dans le liquide débouchant en aval de la section de stabilisation, un séparateur de boue (14) pour les macroflocons produits en une canalisation d'écoulement (18) pour le liquide clarifié.

8. Dispositif selon la revendication 7, caractérisé en ce qu'il comprend une pompe centrifuge (1) insérée, dans le sens de l'écoulement du liquide, dans la canalisation d'arrivée (2), an aval de l'embouchure de la canalisation d'amenée (3) pour le gaz.

9. Dispositif selon la revendication 7, caractérisé en ce qu'il comprend un éjecteur (21/22) placé dans la canalisation d'arrivée (2) qui entraîne le gaz qui l'entoure.

10. Dispositif selon la revendication 7, caractérisé en ce qu'il comprend un séparateur (4) pour des bulles de gaz assez grandes.

11. Dispositif selon la revendication 10, caractérisé en ce qu'il comprend une canalisation de retour (6) conduisant du séparateur (4) à la canalisation d'arrivée (2).

12. Mise en oeuvre du dispositif selon la revendication 7, en combinaison avec une unité d'électrolyse équipée d'une anode réactive.

**Claims**

1. Process for the continuous removal of substances contained in a contaminated, surfactant-containing liquid, which can also contain dirt accumulations and phosphates, by introducing into the liquid both a gas in the form of bubbles which are distributed in the liquid as a dispersion and at least approximately homogeneously, as well as an additive for the formation of microflocs, whereby at least 15 litres gas per $m^3$ liquid are added, the diameter of the gas bubbles is a maximum of 100 µ and the additive consists of an inorganic electrolyte, the larger dirt accumulations which may be present in the liquid, after being broken up, are also distributed as a dispersion and at least approximately homogeneously in the liquid, after a smoothing of the flow an anionic organic polyelectrolyte is admixed with the liquid and the macroflocs formed thereby are separated to clarify the liquid.

2. Process according to claim 1, characterized in that the gas bubbles in the contaminated liquid consist of air.

3. Process according to claim 1, characterized in that the gas bubbles in the contaminated liquid consist of carbon dioxide ($CO_2$).

4. Process according to claim 3, characterized in that the $CO_2$ is added to the contaminated liquid in the liquid state of aggregation.

5. Process according to claim 1, characterized in that larger gas bubbles are withdrawn from the process and recycled into the inflowing contaminated liquid.

6. Process according to claim 1, characterized in that the distribution of the gas bubbles in the liquid and the breaking up and distribution of the larger dirt accumulations present in the liquid are carried out in the same process step.

7. Apparatus for the execution of the process according to claim 1, characterized by a feed line (2) for the contaminated, surfactant-containing liquid, a feed line (3) for the gas and a feed line (10) for feeding the electrolyte into the liquid, by a device (1, 21/22) for the very fine distribution of the gas in the liquid, and a device for breaking up dirt accumulations possibly present in the liquid and distributing in the liquid the particles so formed, by a mixing section (8) which the liquid next flows through and a smoothing and reaction section (11), a feed line (15), entering after the smoothing section, for feeding the anionic polyelectrolyte into the liquid, by a sludge separator (14) for the macroflocs formed and a discharge line (18) for the clarified liquid.

8. Apparatus according to claim 7, characterized by a centrifugal pump (1) which, viewed in the flow direction of the liquid, is arranged in the feeed line (2) after the junction of the feed line (3) for the gas.

9. Apparatus according to claim 7, characterized by an ejector (21/22) in the feed line (2) which entrains the gas surrounding it.

10. Apparatus according to claim 7, characterized by a separator (4) for the larger gas bubbles.

11. Apparatus according to claim 10, characterized by a recycle line (6) from the separator (4) to the feed line (2).

12. Use of the apparatus according to claim 7 in conjunction with an electrolysis unit having a sacrificial anode.

EP 0 130 943 B1

FIG.1

FIG.2

1